# FASCICULE DE BREVET EUROPEEN

(11) **EP 0 452 166 B1**
(45) Date de publication et mention de la délivrance du brevet: **31.08.1994**
(21) Numéro de dépôt: 91400608.5
(22) Date de dépôt: 06.03.1991
(51) Int. Cl.: G01B 5/00, B23P 19/08

(54) **Dispositif de palpage de segments montés sur un piston et appareil de contrôle de segments équipé d'un tel dispositif**
Vorrichtung zur Abtastung von Dichtungsringen, montiert auf einem Kolben, und Apparat, ausgestattet mit einer solchen Vorrichtung, zur Prüfung von Dichtungsringen
Device for sensing rings assembled on a piston and apparatus equipped with such a device for controlling the rings

(30) Priorité: 09.03.1990 FR 9003010
(43) Date de publication de la demande: 16.10.1991
(73) Titulaire: RENAULT AUTOMATION, 92109 Boulogne-Billancourt (FR)
(72) Inventeur: Thurier, Yvan, F-94320 - Thiais (FR)
(74) Mandataire: Ernst-Schonberg, Michel

(56) Documents cités:
- EP-A- 0 341 161
- GB-A- 2 069 700
- US-A- 4 084 727
- PATENT ABSTRACTS OF JAPAN, vol. 11, no. 180 (M-597)(2627), 10 juin 1987; & JP-A-629837

## Description

La présente invention est relative à un dispositif de palpage de segments monté sur un piston et à un appareil de contrôle de segments équipé d'un tel dispositif. Plus particulièrement, l'invention concerne un tel dispositif et un tel appareil conçus pour assurer un contrôle automatisé des segments montés sur un piston destiné à équiper un moteur à combustion interne.

Dans les chaînes de montage actuelles de tels moteurs, la mise en place des segments sur les pistons et l'insertion des pistons garnis de segments dans les cylindres du moteur sont des opérations entièrement automatisées. Cependant, lors du montage des segments, des accidents peuvent se produire : insertion défectueuse, casse d'un segment etc... Un contrôle est donc nécessaire pour détecter ces accidents et réparer les pistons garnis présentant de tels défauts, de manière à empêcher que ces pistons ne soient installés dans les cylindres d'un moteur.

Actuellement, un opérateur pratique sur le piston un contrôle tactile et visuel pour vérifier l'état des segments et la correction de leur montage. Une telle solution est évidemment coûteuse en frais de personnel et empêche que les opérations de montage de segments et d'insertion des pistons garnis s'enchaînent automatiquement, c'est-à-dire sans intervention humaine, solution qui est pourtant hautement souhaitable tant pour des raisons de fiabilité que pour des raisons de coût.

La présente invention a donc pour but de réaliser un dispositif de palpage de segments montés sur un piston, conçus pour équiper un appareil de contrôle automatique des segments ainsi montés, de manière à autoriser une automatisation complète de la chaîne d'opérations qui va du montage des segments sur le piston à l'insertion du piston ainsi garni dans un cylindre d'un moteur.

On atteint ce but de l'invention, par la mise en oeuvre du dispositif conforme à la caractéristique de la revendication 1.

Le dispositif comprend en outre un organe de support des moyens de poussée et des moyens de détection, monté rotatif autour de l'axe d'un piston installé dans le dispositif et des moyens moteurs pour faire tourner l'organe de support de manière à l'entraîner dans une pluralité de position de détection de la saillie du segment.

Les moyens de poussée comprennent au moins un levier articulé sur l'organe de support et mobile entre une première position écartée de l'axe de rotation de cet organe pour permettre l'installation d'un piston dans le dispositif et une deuxième position rapprochée de cet axe, au contact de la surface périphérique du piston et au droit du segment pour repousser celui-ci dans sa gorge au niveau du contact.

Les moyens de détection comprennent au moins un levier de mesure articulé sur l'organe de support et mobile radialement par rapport à l'axe du piston entre une première position écartée de cet axe pour permettre l'insertion d'un piston dans le dispositif et une deuxième position rapprochée de cet axe, au contact d'une partie du segment mise en saillie maximum hors de la gorge par au moins un levier de poussée, placé dans sa deuxième position.

Les moyens de détection comprennent en outre un levier de référence mobile radialement par rapport à l'axe de rotation de l'organe de support, entre une première position écartée de cet axe pour permettre l'insertion d'un piston dans le dispositif et une deuxième position rapprochée de cet axe, au contact de la surface périphérique du piston dans le voisinage du point de contact du levier de mesure avec la partie en saillie du segment, le dispositif comprenant en outre des moyens de transmission de l'écart relatif des positions des leviers de mesure et de référence par rapport à l'axe du piston, à un organe de mesure de cet écart relatif, qui est représentatif de la saillie du segment au droit du levier de mesure.

Suivant un mode de réalisation particulier du dispositif selon l'invention, conçu pour le palpage d'une pluralité de segments montés dans des gorges du piston, le dispositif comprend autant d'ensembles constitués de moyens de poussée et de moyens de détection de la saillie d'un segment qu'il y a de segments à palper, ces ensembles étant montés sur un organe de support commun monté rotatif autour d'un axe du dispositif sur lequel on centre un piston à palper.

L'invention fournit aussi un appareil de contrôle de segments montés sur des pistons transportés par un convoyeur, cet appareil comprenant un dispositif de palpage tel que défini ci-dessus, un robot pour faire passer chaque piston du convoyeur au dispositif et pour replacer le piston sur le convoyeur après palpage, des moyens de saisie et de traitement des signaux délivrés par le dispositif et représentatifs des mesures de saillies de segments et de la position angulaire des saillies mesurées autour de l'axe du piston, et des moyens d'affichage et d'impression des résultats du traitement.

D'autres caractéristiques et avantages de la présente invention apparaîtront à la lecture de la description qui va suivre et à l'examen du dessin annexé dans lequel :
- la figure 1 est une vue en coupe axiale du dispositif de palpage suivant la présente invention,
- la figure 2 est une coupe transversale du dispositif suivant l'invention, prise suivant le trait de coupe II-II, de la figure 1,
- la figure 3 est une vue en coupe transversale du dispositif suivant l'invention, prise suivant le trait de coupe III-III de la figure 1,
- la figure 4 est une vue en coupe transversale du dispositif suivant l'invention, prise suivant le trait de coupe IV-IV de la figure 1, et
- la figure 5 est un schéma de l'organisation de l'appareil de contrôle suivant l'invention, équipé du dispositif de palpage représenté aux figures 1 à 4.

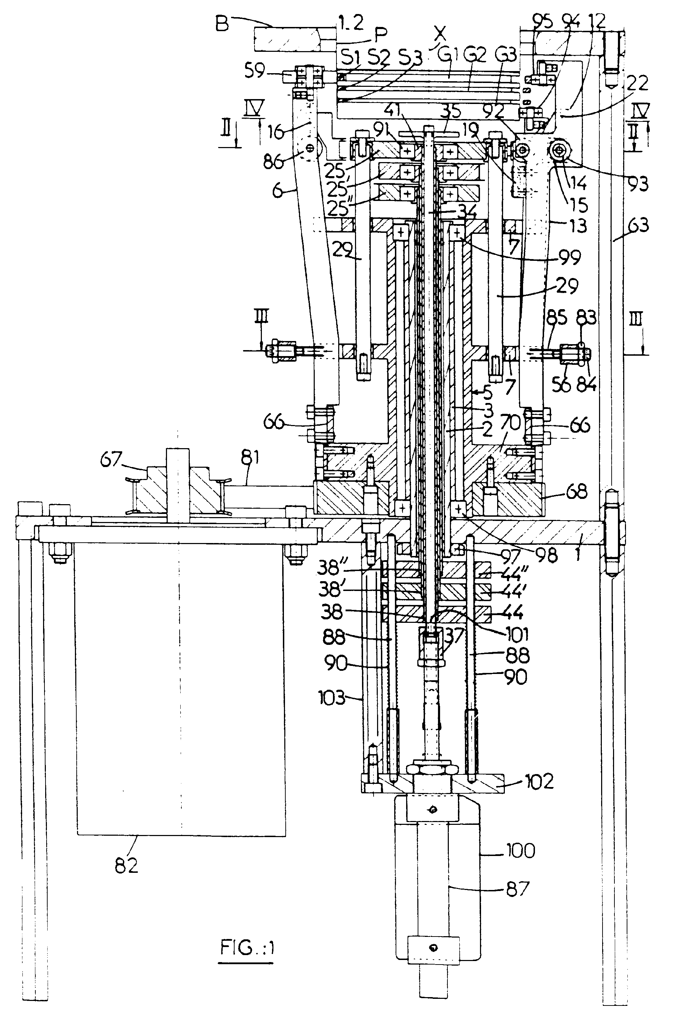

On se réfère à la figure 1 du dessin annexé où il apparaît que le dispositif de palpage suivant l'invention est conçu pour recevoir un piston P garni de segments S1 S2, S3, à travers une ouverture percée dans un bouclier B. Comme on le verra plus loin, le piston est installé dans le dispositif par un robot manipulateur. Le bouclier B assure la protection du dispositif suivant l'invention contre des fausses manoeuvres du robot résultant d'une trajectoire incorrecte du piston à serrer ou d'une chute de celui-ci, par exemple. Le dispositif présente un axe X, vertical par exemple, et le piston est centré sur cet axe par le robot, dans la position de palpage représentée au dessin.

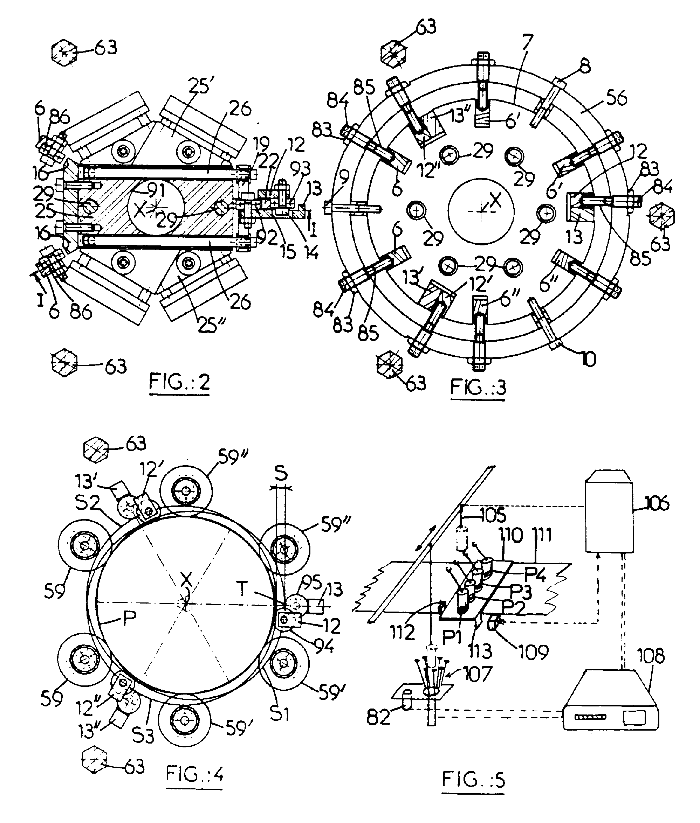

Le dispositif comprend trois ensembles mécaniques essentiellement composés de leviers et de cames, comme on le verra plus loin, pour palper respectivement les segments S1, S2, S3. Ces ensembles sont distribués circulairement autour de l'axe X, par pas réguliers de 120°. Ils sont identiques dans leur structure comme dans leur fonctionnement. On ne décrira donc complètement dans la suite que la structure et le fonctionnement de l'ensemble associé au segment S1, en liaison notamment avec la coupe axiale du dispositif représenté à la figure 1, prise suivant la trait de coupe I-I de la figure 2.

Une platine 1 (voir figure 1) supporte l'ensemble du dispositif de palpage suivant l'invention. Celui-ci comprend un moyeu 5 monté à rotation sur une fusée 2 fixée sur la platine 1, par l'intermédiaire de roulements à billes 98 et 99 montés à la base et à la partie supérieure du moyeu respectivement. Un écrou 97 bloque la fusée 2 sur la platine 1.

En se référant aux figures 1 et 2 du dessin annexé, il apparaît que l'ensemble de palpage associé au segment S1 est constitué de deux leviers de poussé 6, d'un levier de référence 12 et d'un levier de palpage 13. Sur la figure 2, il apparaît que les leviers 6 sont agencés symétriquement par rapport à un plan vertical passant par l'axe X, tangentiellement à des galets 92 et 93 portés par les bras 13 et 12 respectivement. Chacun des leviers 6 est articulé sur une base 70 du moyeu 5 au moyen d'un morceau de clinquant 66 fixé par des vis, d'une part à une extrémité du levier et d'autre part à une partie en alignement de la périphérie de la base 70. Les leviers 6 peuvent ainsi basculer dans un plan radial pour s'écarter ou se rapprocher du piston P. Un galet 59 est monté rotatif à l'extrémité supérieure de chacun des leviers 6. Dans la position représenté à la figure 1, le galet 59 est appliqué contre le piston P pour pousser le segment S1 au fond d'une gorge G1 où il est installé, comme le sont les segments S2 et S3 dans les gorges G2, G3 respectivement.

Cette pression des galets 59 sur le segment S1 fait ressortir celui-ci de la gorge G1, du côté des leviers 12 de référence et 13 de palpage. Suivant une caractéristique essentielle de la présente invention, la géométrie et la continuité du segment S1 sont mesurés par palpage de la saillie du segment S1, à l'aide du levier 13 de palpage, cette saillie étant mesurée par rapport à une position de référence repérée à l'aide du levier de référence 12. Les leviers 12 et 13 sont munis à leur extrémité supérieure de galets rotatifs 94 et 95 respectivement, conçus pour venir s'appliquer sur l'extrémité du piston et sur le segment S1 respectivement. Les leviers 12 et 13 sont articulés sur la base 70 du moyeu 5 à l'aide d'un morceau de clinquant 66, tout comme le sont les leviers 6. Ainsi peuvent-ils basculer radialement par rapport à l'axe X du dispositif. Dans la position représentée à la figure 1 où ils sont en contact respectivement avec l'extrémité du piston P et la partie en saillie du segment S1, les leviers 12 et 13 sont ainsi inclinés l'un sur l'autre d'un angle proportionnel à la saillie du segment S1 par rapport à la surface périphérique du piston P.

Cet écart angulaire est transmis par une came 22 coopérant avec les galet 92 et 93 montés sur les leviers 13 et 12, respectivement, et par un tube 38 coulissant sur l'axe X, jusqu'à un embout inférieur 44 de ce tube, ou un capteur de déplacement dit "incrémental", délivre un signal représentatif d'un déplacement vertical du tube 38 et de l'embout 44, déplacement lui-même proportionnel à la saillie du segment S1.

Ainsi donc, le dispositif suivant l'invention doit-il comprendre des moyens permettant d'écarter les leviers 6, 12 et 13 de l'axe X de manière à permettre l'insertion d'un piston P entre les galets 59, 94 et 95, à travers le bouclier B supporté par des colonnes 63 solidaires de la platine 1. Ces moyens doivent ensuite provoquer le rappel de ces galets vers l'axe X, en appui sur le piston P pour les galets 59 et 94, et sur la partie en saillie du segment S1, pour le galet 95.

Ces moyens comprennent essentiellement des cames 16 et la came 22 (voir figure 1 et 2) montées sur une table 25 elle-même montée à rotation sur l'extrémité supérieure du tube 38, par l'intermédiaire d'un roulement à billes 91 et d'un embout supérieur 41.

Les cames 16 sont solidaires de l'extrémité gauche (du point de vue des figures 1 et 2) de la table 25 et sont agencées de manière à coopérer avec des galets 86 montés sur les leviers 6. La came 22 est montée sur un support 19 solidaire de deux colonnes horizontales 26 coulissant transversalement à l'axe X dans la table 25. Des colonnes 29 passant dans des joues 7, 7′ du moyeu 5 guident des déplacements verticaux de la table 25 et du tube 38 qui lui est associé. Un tirant 34 coulisse dans ce tube 38. Le tirant 34 est solidaire à son extrémité supérieure d'un embout 35 et, à son extrémité inférieure 36, d'un nez 37 d'un vérin 87 dont la ligne d'action est confondue avec l'axe X.

Comme représenté à la figure 1, la came 22 est profilée en S de manière à passer entre les galets 92 et 93 à partir de son support 19. Sur la figure 1, il apparaît que les cames 16 et 22 sont profilées de manière à s'écarter au maximum de l'axe X au niveau de leur extrémité supérieure.

Lorsque le vérin 87 tire le tirant 34 vers le bas (du point de vue de la figure 1), l'embout 35 vient s'appuyer sur la table 25 qui se déplace aussi vers le bas avec les cames 16 et 22 qui chassent alors vers l'extérieur les galets 59, 94 et 95 et les leviers qui les portent. Une telle action du vérin 87 permet alors à un robot d'insérer la tête d'un piston P dans le dispositif, à travers le bouclier B.

Le dispositif suivant l'invention comprend encore des moyens de rappel des leviers 6, 12 et 13 vers l'axe X, au contact du piston P, lorsque cesse la traction appliquée par le vérin 87 au tirant 34. Ces moyens sont représentés en coupe transversale à la figure 3.

Sur cette figure, il apparaît qu'un anneau 56 est fixé concentriquement sur la joue 7 du moyeu 5, par des vis d'entretoisement 8, 9, 10. L'anneau 56 supporte des vis 84 bloquées par des écrous 83, ces vis centrant des ressorts hélicoïdaux 85 qui chargent radialement vers l'axe X, d'une part les leviers 6, d'autre part le levier 12 de référence adjacent au levier 13 de mesure.

On notera en outre que ces leviers 12 et 13 sont couplés avec jeu par la tête d'un axe 14 qui porte le galet 93 sur le levier 13, cette tête passant avec jeu dans une lumière 15 (voir figure 2) percée dans le levier 13. Ainsi, quand sous l'action du vérin 87 la came 22 repousse vers l'extérieur le levier 12 par son contact µavec le galet 93, le levier 13 suit-il le levier 12, après rattrapage du jeu. C'est ainsi que les leviers 12 et 13 peuvent s'écarter simultanément de l'axe X du dispositif, pour permettre l'insertion d'un piston P dans celui-ci. Le jeu établi entre la tête de la vis 14 et la lumière 15 doit être suffisant pour permettre un déplacement relatif du levier 12 par rapport au levier 13 lors de la mise en prise des galets 94 et 95 avec le piston P, comme on le verra plus loin dans la description du fonctionnement du dispositif suivant l'invention.

On remarquera encore sur la figure 1 que l'embout inférieur 44 du tube 38 est monté coulissant sur des colonnettes 88 d'axe parallèle à l'axe X, cet embout étant chargé élastiquement vers le haut (du point de vue de la figure) par des ressorts 90 montés sur ces colonnettes.

La figure 4 est une vue en coupe qui fait apparaître les positions relatives des galets 59, 94, 95 par rapport au segment S1, lorsque ces galets sont chargés vers l'axe X. Comme on l'a vu plus haut, les galets 59 ont pour fonction de pousser le segment S1 dans la gorge G1 (voir figure 1), alors que le galet 95 a pour fonction de mesurer la saillie S (voir figure 4) du segment hors de cette gorge sous l'effet de la poussée des galets 59, en un point T du segment situé dans le plan de symétrie de la paire de galets 59, ceux-ci et le point T étant situés de part et d'autre de l'axe X. On comprend qu'ainsi, suivant la présente invention, la saillie maximum du segment S1 sous la poussée des galets 59 est justement localisée au point T, du fait de la déformation élastique symétrique subie par le segment S1 sous cette poussée.

Suivant la présente invention, le dispositif comprend des moyens pour faire tourner sur un tour l'ensemble des galets 59, 94, 95 autour de l'axe X, et pour mesurer la saillie S en fonction de la position angulaire de l'ensemble.

On comprend que ce relevé est riche d'informations car il permet d'une part, le contrôle de la constance de cette saillie et donc de la régularité géométrique du segment sur tout son périmètre et, d'autre part, le repérage de la position et de la largeur d'une fente qui sépare les deux extrémités du segment comme il est bien connu. Cette fente est repérée par la brusque variation correspondante de la saillie S mesurée qui s'annule évidemment au droit de cette fente. Comme on l'expliquera dans la suite en liaison avec la description du fonctionnement du dispositif suivant l'invention, le relevé des variations des saillies S relatives aux trois segments S1, S2, S3, permet de contrôler complètement l'état des segments et de leur montage sur le piston P.

Suivant l'invention, on relève simultanément sur un tour de saillie S des trois segments S1, S2, S3, en incorporant au dispositif, trois ensembles de leviers et de galets tel que l'ensemble (6, 12, 13, 59, 94, 95) associé au segment S1, chacun des deux autres ensemble étant associé à l'un des deux autres segments S2, S3. Cette triplication apparaît sur les figures 2, 3 et 4 où les éléments des ensembles associés aux segments S2 et S3 sont repérés par des nombres identiques à ceux de l'ensemble associé au segment S1, mais affectés d'un "prime" et d'un "seconde" respectivement. Comme il est clair sur les figures 2 à 4, ces trois ensembles sont décalés angulairement de 120° pour des raisons de symétrie et d'équilibrage. Les paires de galets de poussée 59, 59′, 59˝ sont alors de préférence répartis angulairement à 60° les uns des autres, comme il est clair sur la figure 4.

Le dispositif comprend en outre un mécanisme pour assurer la rotation simultanée des trois ensembles de leviers et de galets, ces leviers étant d'ailleurs tous fixés sur la joue 70 du moyeu 5, comme représenté à la figure 1 en ce qui concerne l'ensemble associé au segment S1. Pour ce faire, un moteur 82 entraîne par l'intermédiaire d'une poulie 97 et d'une courroie crantée 81, une poulie 68 solidaire du moyeu 5 et coaxiale à celui-ci.

Le fonctionnement du dispositif de palpage suivant l'invention s'établit alors comme suit. Pour permettre l'installation du piston P dans la position représentée à la figure 1, le vérin 87 est actionné ce qui a pour effet de tirer vers le bas le tirant 34 et son embout supérieur 35 qui s'applique alors sur la table 25. Les trois tables 25, 25′ et 25˝ sont alors simultanément tirées vers le bas. En se référant plus particulièrement à la table 25, il apparaît que les cames 16 et 22 solidaires de cette table sont tirées vers le bas en même temps que la table 25, les cames 16 s'appuyant alors sur les galets 86 solidaires des leviers 6 pour chasser ceux-ci vers l'extérieur, en dégageant ainsi les galets 59 de l'espace dans lequel le piston P doit être installé. Simultanément, la came 22 vient s'appuyer par son profil oblique extérieur terminal sur le galet 93 monté sur le levier 12, ce qui a pour effet d'écarter ce levier et le galet 94 de l'axe X du dispositif en dégageant ainsi l'espace dans lequel doit venir se placer le piston P. Le basculement vers l'extérieur du levier 12 sous l'effet de la came 22 provoque également celui du levier 13, du fait que la tête de la vis 14 qui porte le galet 93 du levier 12 vient alors porter sur un bord de la lumière 15, percée dans le levier 13, en chargeant celui-ci à l'écart de l'axe X. Ainsi, le galet 95 est-il lui-même écarté vers la droite de la position représentée au dessin où il est en contact avec une partie en saillie du segment S1.

Une fois le piston P installé dans la position représentée à la figure 1, l'excitation du vérin 87 est coupée et le tirant 34 remonte, en libérant la table 25 qui remonte alors aussi sous la poussée des ressorts 90 appliquée à l'embout inférieur 44 du tube 38 qui raccorde cet embout à la table 25. La remontée de la table 25 et de la came 22 montée à coulissement horizontal sur celle-ci grâce aux colonnes 26, permet d'une part aux leviers 6 de venir en appui sur le piston P en forçant le segment S1 au fond de la gorge G1 sous l'action des ressorts 85. D'autre part, et simultanément, la came 22 vient porter sur le galet 92 par sa face oblique orientée vers l'axe X de manière à pousser le galet 95 contre la partie en saillie du segment S1. Le ressort 85 associé au levier 12 charge celui-ci vers l'axe X pour amener le galet 94 de référence au contact de la périphérie de la tête du piston P, grâce au jeu établi entre la tête de vis 14 et la lumière 15 percée dans le levier 13.

Il apparaît ainsi que la came 22 de mesure se positionne entre les galets 92 et 93, quand les galets 94 et 95 sont au contact du piston et du segment respectivement, de manière que sa face interne soit appliquée contre le galet 92 alors que sa face externe est au contact du galet 93. Sa position verticale est donc fonction du décalage horizontal des galets 94 et 95 et donc de la saillie S du segment hors de sa gorge.

La position verticale de la came 22 fixe celle de la table 25 sur laquelle elle est montée. A son tour, la position de la table 25 fixe celle de l'embout inférieur 44 solidaire du tube 38. Il est clair donc que l'amplitude de la remontée de cet embout 44, comme suite à la désexcitation du vérin 87, est fonction de la saillie S. Un capteur de position 100 est associé à l'embout 44 pour mesurer cette amplitude, et donc la saillie S du segment S1 sous la poussée des galets 59.

Ainsi, la came 22 permet-elle de convertir un écart horizontal (égal à la saillie S) entre les points de contact des galets 94 et 95 avec le piston P et le segment S1 respectivement, en un déplacement vertical de l'embout 44, suivant l'axe X. La relation liant cet écart et ce déplacement peut être linéarisée en choisissant convenablement les pentes des profils actifs de la came, comme il est bien connu dans la technique.

Une rotation du moyeu 5, imprimée par le moteur 67, permet de relever en sortie du capteur 100 l'amplitube de la saillie S sur un tour. Les trois ensembles de palpage associés aux segments S1, S2, S3 tournant d'un bloc sous l'action du moteur 82, on relève simultanement les trois saillies en fonction de la position angulaire du moyeu 5 par rapport à la platine 1.

De nombreux capteurs de position du commerce peuvent être utilisés pour constituer le capteur 100. A titre d'exemple, le capteur ou palpeur de mesure "incrémental" référencé MT12 dans les catalogues de la Société HEIDENHAIN (RFA), convient pour constituer le capteur 100. Il est à noter à cet égard qu'un seul (100) de ces capteurs est représenté à la figure 1, à savoir celui qui est associé à l'embout 44. La pointe de mesure 101 du capteur s'applique sur la face inférieure de l'embout 44, en arrière et au droit de la tige du vérin 87 qui la masque sur la figure 1. Le capteur 100 et des capteurs 100′ et 100˝ (non représentés) associés aux deux autres ensembles de palpage sont ainsi fixés circonférentiellement sur la face inférieure d'une platine auxiliaire de support 102 fixé sous la platine principale 1 à l'aide de plusieurs colonnes 103.

Le moteur est constitué de préférence par un moteur pas à pas tournant de N pas sur un tour. Grâce à un tel moteur, on peut entraîner le moyeu 5 dans un certain nombre (réglable) de positions prédéterminées de mesure, distribuées régulièrement sur un tour.

Le dispositif de palpage suivant l'invention est conçu notamment pour être incorporé à un appareil, schématisé à la figure 5, de contrôle de pistons garnis de segments. Cet appareil comprend essentiellement un robot de manipulation 105 commandé par une baie électronique 106, un dispositif de palpage 107 suivant l'invention et un coffret électronique de contrôle 108 conçu pour commander le dispositif 107, pour traiter les signaux émis par les capteurs 100, 100′, 100˝ de ce dispositif et pour transmettre les résultats du traitement à la baie de commande 106. Celle-ci est reliée à un appareil d'écriture/lecture 109 dont on expliquera le rôle dans la suite.

Les pistons garnis de segments à contrôler à l'aide de l'appareil suivant l'invention sont portés par des palettes 110 circulant sur le convoyeur 111. Chaque palette peut porter par exemple quatre pistons P1, P2, P3, P4 destinés à garnir un moteur à combustion interne par exemple. Une butée 112 arrête chaque palette sur le convoyeur 111.

Une séquence de contrôle des segments d'un piston commence par un actionnement du vérin du dispositif 107, sous la commande d'un signal venu de la baie 106, à travers le coffret électronique 108. Cette commande provoque l'écartement des leviers de poussée et de palpage du dispositif 107, pour dégager l'espace axial dans lequel doit venir s'insérer la tête d'un piston P1 par exemple. Le robot 105 saisit alors le piston P1 sur la palette 110 et l'installe dans le dispositif suivant l'axe X, sous la commande de la baie 106 qui commande ensuite le vérin 87 pour que les leviers de poussée et de palpage reviennent contre le piston P1.

La baie 106 émet ensuite un signal de "départ de cycle" qui provoque le mise en route du moteur 82 du dipositif 107. Ce moteur est un moteur pas à pas dont l'alimentation est commandée de manière à arrêter le rotor du moteur en N positions angulaires équidistantes sur un tour. Une impulsion d'horloge est émise à chaque position. Dans l'appareil de contrôle suivant l'invention, on peut choisir de relever les mesures des saillies des segments, soit à chacune des N positions soit en N/n positions, n étant un nombre entier sous-multiple de N. Dans ce dernier cas, à la fin de chaque groupe de n impulsions, le coffret électronique 108 saisit trois mesures de saillies correspondant chacune à celles d'un des segments S1, S2, S3. Après comptage d'un nombre N d'impulsions, le coffret 108 commande l'arrêt du moteur 82 et exécute des tests sur les trois séries de mesures acquises pendant la rotation sur un tour du dispositif de contrôle.

Pour ce faire, le coffret est équipé de circuits de traitement de signaux conçus pour comparer les signaux reçus à des valeurs de seuil. Ces valeurs de seuil sont programmées, tout comme les valeurs N et n, à l'aide d'un clavier (non représenté) connecté au coffret 108.

Un premier test consiste à vérifier que, pour chaque segment, les mesures de la saillie S sur un tour, restent comprises entre deux seuils définissant respectivement une saillie maximale et une saillie minimale. Les mesures de saillie permettent simultanément de repérer la position et la largeur des fentes des segments, les mesures relevées au niveau de ces fentes tombant évidemment en dessous de la valeur de saillie minimale définie ci-dessus.

D'autres tests sont alors effectués sur les largeurs de ces fentes et sur leurs positions relatives.

Ainsi, à partir de la position relevée de la fente du segment S1 par exemple, les positions angulaires des deux autres fentes doivent être comprises dans des fourchettes angulaires prédéterminées choisies de manière à éviter que les fentes des segments d'un même piston n'occupent la même position angulaire, qui pourrait poser des problèmes d'étanchéité du piston. Les fourchettes angulaires peuvent être choisies de manière que les pistons passant le test présentent des fentes distribuées dans trois fourchettes centrées sur des positions décalées de 120° les unes par rapport aux autres, par exemple.

Le coffret exécute un troisième test pour vérifier que la largeur de la fente de chaque segment est inférieure à une largeur prédéterminée. On détecte ainsi un segment cassé, auquel il manque donc un morceau, lorsque la fente mesurée est de longueur supérieure à la largeur prédéterminée.

Le coffret transmet le résultat, des tests à la baie de contrôle qui commande l'appareil de lecture/écriture 109 pour que celui-ci reporte sur une étiquette d'identification 113 collée sur une patte 114 solidaire de la palette 110, des inscriptions relatives à l'état de chacun des segments des différents pistons portés par la palette 110 et successivement palpés dans le dispositif 107. L'appareil 109 est aussi utilisé en lecteur de données d'identification des pistons, lorsque ceux-ci sont arrêtés pour contrôle, données transmises par cet appareil à la baie 106.

Si tous les pistons de la palette ont correctement passés les tests, la palette est dirigée vers une chaîne de montage de moteurs. Sinon elle est orientée vers une chaîne de rectification où les pistons garnis de manière défectueuse sont réparés pour être recyclés dans la chaîne de contrôle et de montage sur le moteur.

Bien entendu l'invention n'est pas limitée au mode de réalisation décrit et représenté qui n'a été donné qu'à titre d'exemple. Ainsi, on ne sortirait pas du cadre de l'invention en adaptant le dispositif de palpage décrit au contrôle de pistons comportant un nombre de segments différents de trois.

## Revendications

1. Dispositif de palpage d'au moins un segment monté dans une gorge annulaire associée d'un piston, caractérisé en ce qu'il comprend sur un organe de support (5) monté rotatif autour d'un axe (X) du dispositif de palpage sur lequel le piston doit être centré, (a) des moyens pour pousser le segment dans la gorge en au moins un point de sa périphérie et (b) des moyens pour détecter la saillie du segment hors de la gorge sous la poussée de ces moyens, en au moins un autre point de sa périphérie.

2. Dispositif conforme à la revendication 1, caractérisé en ce qu'il comprend des moyens moteurs (82) pour faire tourner l'organe de support (5) de manière à l'entraîner dans une pluralité de positions de détection de la saillie du segment.

3. Dispositif conforme à l'une quelconque des revendications 1 et 2, caractérisé en ce que les moyens de poussée comprennent au moins un levier (6) articulé sur l'organe de support (5) et mobile entre une première position écartée de l'axe (X) de rotation de cet organe pour permettre l'installation d'un piston dans le dispositif et une deuxième position rapprochée de l'axe (X), au contact de la surface périphérique du piston et au droit du segment pour repousser celui-ci dans sa gorge au niveau du contact.

4. Dispositif conforme à la revendication 3, caractérisé en ce que les moyens de poussée comprennent deux leviers (6) mobiles radialement par rapport à l'axe (X) de rotation de l'organe de support (5) et symétriquement par rapport à un plan passant par cet axe et par les moyens de détection de la saillie (S) du segment, ces moyens de poussée et de détection étant disposés de part et d'autre de l'axe (X).

5. Dispositif conforme à l'une quelconque des revendications 3 et 4, caractérisé en ce que les moyens de détection comprennent au moins un levier de mesure (13) articulé sur l'organe de support (5) et mobile radialement par rapport à l'axe (X) entre une première position écartée de cet axe pour permettre l'insertion d'un piston dans le dispositif et une deuxième position rapprochée de cet axe, au contact d'une partie du segment mise en saillie maximum hors de la gorge par au moins un levier (6) de poussée, placé dans sa deuxième position.

6. Dispositif conforme à la revendication 5, caractérisé en ce qu'il comprend un levier de référence (12) mobile radialement par rapport à l'axe (X) de l'organe de support (5), entre une première position écartée de l'axe (X) pour permettre l'insertion d'un piston dans le dispositif et une deuxième position rapprochée de cet axe, au contact de la surface périphérique du piston dans le voisinage du point de contact du levier de mesure (13) avec la partie en saillie maximum du segment, le dispositif comprenant en outre des moyens (22, 25, 38, 44) de transmission de l'écart relatif des positions des leviers de mesure (13) et de référence (12) par rapport à l'axe (X) du piston, à un organe de mesure (100) de cet écart relatif, représentatif de la saillie maximum (S) du segment au droit du levier de mesure (13).

7. Dispositif conforme à la revendication 6, caractérisé en ce que les moyens de transmission (22, 25, 38, 44) comprennent une came (22) montée mobile radialement sur une table ( 25 ) mobile sur l'axe (X) du dispositif, la came (25) passant entre des galets (92) et (93) montés sur les leviers (13) et (12) respectivement pour arrêter la position de la table ( 25 ) sur l'axe (X) en fonction de la saillie (S) du segment, telle que détectée par des galets (94) et (95) montés sur les leviers (12) et (13) respectivement et portant sur la surface périphérique du piston et sur la partie en saillie du segment, respectivement, quand les leviers (6, 12, 13) sont dans leur deuxième position.

8. Dispositif conforme à la revendication 7, caractérisé en ce qu'il comprend un capteur de déplacement (100) sensible à la position axiale d'un embout (44) mobile sur l'axe (X) avec la table (25) pour fournir un signal représentatif de la saillie (S) à mesurer, quand les leviers (6, 12, 13) passent de leur première à leur deuxième position.

9. Dispositif conforme à la revendication 8, caractérisé en ce qu'il comprend un vérin (87) muni d'une tige de manoeuvre mobile sur l'axe (X) et agencée de manière à agir sur la position axiale de la table (25) par l'intermédiaire de moyens (34, 35), au moins une came (16) montée sur cette table pour agir sur la position des leviers (6) de poussée, alors que la came (22) agit de même sur la position du levier de mesure (13) et du levier de référence (12), le vérin (87) pouvant être commandé pour déplacer la table (25) de manière à ramener les leviers (6, 12, 13) de leur deuxième à leur première position.

10. Dispositif conforme à la revendication 9, caractérisé en ce qu'il comprend des moyens (83, 84, 85) pour charger élastiquement les leviers (6, 13) vers l'axe (X) du dispositif, et des ressorts (90) pour charger la table (25) à l'encontre de l'action du vérin (87).

11. Dispositif conforme à la revendication 10, caractérisé en ce qu'il comprend des moyens de couplage (14, 15) avec jeu entre le levier de référence (12) et le levier de mesure (13).

12. Dispositif conforme à l'une quelconque des revendications 3 à 11, caractérisé en ce que les leviers (6, 12, 13) sont munis de galets de contact (59, 94, 95) respectivement.

13. Dispositif conforme à l'une quelconque des revendications précédentes, conçu pour le palpage d'une pluralité de segments (S1, S2, S3) montés dans des gorges (G1, G2, G3) du piston étagées suivants l'axe (X) de ce piston, caractérisé en ce qu'il comprend autant d'ensembles constitués de moyens de poussée et de moyens de détection de la saillie d'un segment qu'il y a de segments à palper, ces ensembles étant montés sur un organe de support (5) commun monté rotatif autour d'un axe (X) du dispositif sur lequel un piston à palper doit être centré.

14. Dispositif conforme à la revendication 13, caractérisé en ce que lesdits ensembles sont distribués régulièrement autour de l'axe (X) de l'organe de support.

15. Utilisation d'un dispositif de palpage conforme à l'une quelconque des revendications 2 à 14, dans un appareil de contrôle de segments montés sur des pistons (P1, P2, P3, P4) transportés par un convoyeur (111), cet appareil comprenant en outre un robot (105, 106) pour faire passer chaque piston du convoyeur (111) au dispositif (107) et pour replacer le piston sur le convoyeur après palpage, des moyens (108) de saisie et de traitement des signaux délivrés par le dispositif et représentatifs des mesures de saillies de segments et de la position angulaire des saillies mesurées autour de l'axe du piston, et des moyens (109) d'affichage et d'impression des résultats du traitement.

16. Utilisation conforme à la revendication 15, caractérisée en ce que les pistons sont placés par groupe sur des palettes (110) entraînées par le convoyeur (111), en ce que chaque palette est arrêtée par une butée (112) sur le convoyeur (111) jusqu'à la fin des opérations de palpage concernant tous les pistons portés par la palette (110) et en ce que les moyens (109) impriment sur une étiquette (113), solidaire de la palette, des informations élaborées par les moyens de traitement (108) et représentatives de l'état des segments palpés et de la correction de leur montage.

17. Utilisation conforme à l'une quelconque des revendications 15 et 16, caractérisée en ce que les moyens de traitement (a) comparent les mesures de saillie saisies à des valeurs minimum et maximum prédéterminées, (b) comparent la longueur d'une fente formée dans chaque segment à des longueurs maximum et minimum prédéterminées, (c) comparent les positions angulaires relatives des fentes de plusieurs segments montés sur un même piston à des domaines de positions angulaires prédéterminés et (d) diagnostiquent la correction ou la non correction d'un segment et son montage en fonction des résultats des opérations précédentes.

## Patentansprüche

1. Vorrichtung zur Abtastung wenigstens eines Ringes, der in die zugehörige ringförmige Nut eines Kolbens eingesetzt ist, dadurch gekennzeichnet, daß sie an einer Halterung (5), die drehbar um eine Achse (X) der Vorrichtung zur Abtastung angeordnet ist, zu der der Kolben zentriert werden muß, (a) eine Anordnung aufweist um einen Ring in die Nut zu drücken an wenigstens einer Stelle seines Umfangs und (b) eine Anordnung aufweist um während des Drucks der Anordnung das Hervorspringen des Ringes aus der Nut zu messen an wenigstens einer anderen Stelle des Umfangs.

2. Vorrichtung nach Anspruch 1, dadurch gekennzeichnet, daß sie eine Motoranordnung (82) aufweist um die Halterung (5) in Drehung zu versetzten derart, daß sie eine Vielzahl von Meßstellungen für das Hervorspringen des Ringes einnimmt.

3. Vorrichtung nach einem der Ansprüche 1 und 2, dadurch gekennzeichnet, daß die Anordnung zum Drücken wenigstens einen Hebel (6) aufweist, der an der Halterung (5) angelenkt ist und zwischen einer ersten Stellung, die einen Abstand von der Drehachse (X) der Halterung aufweist um das Einsetzen eines Kolbens in die Vorrichtung zu ermöglichen und einer zweiten Stellung, die an die Achse (X) angernähert ist, beweglich ist, unter Berührung der Umfangsfläche des Kolbens und in Verlängerung des Ringes, um diesen erneut in seine Nut auf Höhe der Berührung zu drücken.

4. Vorrichtung nach Anspruch 3, dadurch gekennzeichnet, daß die Anordnung zum Drücken zwei Hebel (6) aufweist, die radial bezüglich der Drehachse (X) der Halterung (5) sind, sowie symmetrisch bezüglich einer Ebene, welche diese Achse und die Meßanordnung für das Hervorspringen (S) des Ringes durchsetzt, wobei die Anordnung zum Drücken und die Meßanordnung beidseits der Achse (X) angeordnet sind.

5. Vorrichtung nach einem der Ansprüche 3 und 4, dadurch gekennzeichnet, daß die Meßanordnung wenigstens einen Meßhebel (13) aufweist, der an der Halterung (5) angelenkt ist und radial bezüglich der Achse (X) beweglich ist zwischen einer ersten Stellung, die einen Abstand von dieser Achse aufweist um das Einsetzen eines Kolbens in die Vorrichtung zu ermöglichen und einer zweiten Stellung, die an diese Achse angenähert ist unter Berührung eines Teils des Ringes, der maximal aus einer Nut hervorspringt, aufgrund wenigstens eines Druckhebels (6), der sich in seiner zweiten Stellung befindet.

6. Vorrichtung nach Anspruch 5, dadurch gekennzeichnet, daß sie einen Referenzhebel (12) aufweist, der radial bezüglich der Achse (X) der Halterung (5) beweglich ist zwischen einer ersten Stellung, die einen Abstand von der Achse (X) aufweist um das Einsetzen des Kolbens in die Vorrichtung zu ermöglichen und einer zweiten Stellung, die an diese Achse angenähert ist unter Berührung der Umfangsfläche des Kolbens in der Nähe der Berührungsstelle des Meßhebels (13) mit dem maximal vorspringenden Abschnitt des Ringes, wobei die Vorrichtung außerdem eine Anordnung (22, 25, 38, 44) aufweist zur Übertragung des Relativabstandes der Stellungen von Meßhebel (13) und Referenzhebel (12) bezüglich der Achse (X) des Kolbens auf ein Meßteil (100) für diesen Relativabstand, entsprechend dem maximalen Hervorspringen (S) des Ringes in Verlängerung des Meßhebels (13).

7. Vorrichtung nach Anspruch 6, dadurch gekennzeichnet, daß die Anordnung (22, 25, 38, 44) zur Übertragung eine Nocke (22) aufweist, der radial beweglich an einem Tisch (25) befestigt ist, der entlang der Achse (X) der Vorrichtung beweglich ist, wobei der Nocken (25) zwischen Rollen (92) und (93) hindurchgleitet, welche an den Hebeln (13) und (12) befestigt sind, zur Feststellung des Tisches an der Achse (X) als Funktion des Hervorspringens (S) des Ringes, wie es von den an den Hebeln (12) bzw. (13) angeordneten Rollen (94) und (95) festgestellt worden ist, welche an der Umfangfläche des Kolbens und am hervorspringenden Abschnitt des Ringes anliegen, wenn die Hebel (6, 12, 13) sich in ihrer zweiten Stellung befinden.

8. Vorrichtung nach Anspruch 7, dadurch gekennzeichnet, daß sie einen Verschiebefühler (100) aufweist, der auf die axiale Stellung des Stutzens (44) anspricht, der entlang der Achse (X) mit dem Tisch (25) beweglich ist um ein Signal zu erzeugen, welches das zu messende Hervorspringen (S) darstellt, wenn die Hebel (6, 12, 13) von ihrer ersten in ihre zweite Stellung übergehen.

9. Vorrichtung nach Anspruch 8, dadurch gekennzeichnet, daß sie einen Druckzylinder (87) aufweist, der mit einer entlang der Achse (X) beweglichen Betätigungsstange versehen ist und der derart ausgestaltet ist, daß er die Axialstellung des Tisches (25) über eine Anordnung (34, 35) festlegen kann, wobei wenigstens ein Nocken (16) am Tisch angeordnet ist um auf die Stellung der Druckhebel (6) einzuwirken, während der Nocken (22) auf die Stellung des Meßhebels (13) und des Referenzhebels (12) einwirkt und der Druckzylinder (87) derartig ansteuerbar ist, daß er den Tisch (25) derart verschiebt, daß die Hebel (6, 12, 13) von ihrer zweiten in ihre erste Stellung zurückkehren.

10. Vorrichtung nach Anspruch 9, dadurch gekennzeichnet, daß sie eine Anordnung (83, 84, 85) aufweist um die Hebel (6, 13) elastisch zur Achse (X) der Vorrichtung hin zu beaufschlagen, sowie Federn (90) aufweist um den Tisch (25) gegen die Wirkung des Druckzylinders (87) zu beaufschlagen.

11. Vorrichtung nach Anspruch 10, dadurch gekennzeichnet, daß sie eine Kupplungsanordnung (14, 15) aufweist mit einem Spiel zwischen dem Referenzhebel (12) und dem Meßhebel (13).

12. Vorrichtung nach einem der Ansprüche 3 bis 11, dadurch gekennzeichnet, daß die Hebel (6, 12, 13) mit entsprechenden Kontaktrollen (59, 94, 95) versehen sind.

13. Vorrichtung nach einem der vorhergehenden Ansprüche, ausgelegt zur Abtastung einer Vielzahl von in die Nuten (G1, G2, G3) eines Kolbens stufenweise entlang der Achse (X) des Kolbens eingesetzten Ringen (S1, S2, S3), dadurch gekennzeichnet, daß sie soviel Einheiten aufweist, bestehend aus einer Druckanordnung und einer Meßanordnung für das Hervorspringen eines Ringes, als abzutastende Ringe vorhanden sind, wobei die Einheiten an einer gemeinsamen Halterung (5) angeordnet sind, welche drehbar um die Achse (X) der Vorrichtung angeordnet ist, zu der ein abzutastender Kolben zentriert werden muß.

14. Vorrichtung nach Anspruch 13, dadurch gekennzeichnet, daß die Einheiten regelmäßig um die Achse (X) der Halterung verteilt sind.

15. Verwendung einer Abtastvorrichtung nach einem der Ansprüche 2 bis 14, in einem Kontrollgerät für an Kolben (P1, P2, P3, P4) angeordnete Ringe, welche von einem Transportband (111) transportiert werden, wobei das Gerät außerdem einen Roboter (105, 106) aufweist um jeden Kolben vom Förderband (111) der Vorrichtung (107) zuzuführen und um den Kolben nach der Abtastung zum Förderband zurückzubefördern, eine Anordnung (108) aufweist zur Entgegennahme und zur Verarbeitung von Signalen, welche von der Vorrichtung geliefert werden und welche die Meßwerte für das Hervorspringen der Ringe und die winkelmäßige Stellung der hervorspringenden gemessenen Teile um die Kolbenachse darstellen, sowie eine Anordnung (109) aufweist zur Anzeige und zum Druck der aus der Verarbeitung stammenden Resultate.

16. Verwendung nach Anspruch 15, dadurch gekennzeichnet, daß die Kolben gruppenweise auf Paletten (110) angeordnet sind, welche vom Förderband (111) bewegt werden und daß jede Palette durch einen Anschlag (112) am Förderband (111) angehalten wird bis zum Ende der Abtastschritte hinsichtlich aller von der Palette (110) getragenen Kolben und daß die Anordnung (109) ein Etikett (113) ausdrukt, welches fest mit der Palette verbunden wird und das die von der Verarbeitungsanordnung (108) erstellten Informationen bezüglich des Zustands der abgetasteten Ringe und des korrekten Montagesitzes trägt.

17. Verwendung nach einem der Andprüche 15 und 16, dadurch gekennzeichnet, daß die Verarbeitungsanordnung (a) die Meßwerte hinsichtlich des Hevorspringens mit vorgegebenen Minimal- und Maximalwerten vergleicht (b), die Länge eines Schlitzes in jedem Ring mit vorgegebenen Maximal- und Minimallängen vergleicht (c), die relativen Winkelstellungen der Schlitze mehrerer am selben Kolben eingesetzten Ringe vergleicht mit vorgegebenen winkelmäßigen Stellungsbereichen und (d) eine Korrektur oder keine Korrektur des Ringes und seiner Anordnung feststellt als Funktion der Resultate der vorhergehenden Schritte.

## Claims

1. A device for sensing at least one piston ring fitted in an associated annular groove in a piston characterised in that it comprises on a support member (5) mounted rotatably about an axis (X) of the sensing device on which the piston is to be centered, (a) means for thrusting the piston ring into the groove at at least one point on its periphery and (b) means for detecting the projection of the piston ring from the groove under the thrust of said means, at at least one other point on its periphery.

2. A device according to claim 1 characterised in that it comprises motor means (82) for rotating the support member (5) so as to entrain it into a plurality of positions for detection of the projection of the piston ring.

3. A device according to either one of claims 1 and 2 characterised in that the thrust means comprise at least one lever (6) pivoted on the support ember (5) and movable between a first position of being moved away from the axis (X) of rotation of said member to permit the installation of a piston in the device and a second position of being moved towards the axis (X), in contact with the peripheral surface of the piston and in line with the piston ring to push it back into its groove at the level of the contact.

4. A device according to claim 3 characterised in that the thrust means comprise two levers (6) movable radially with respect to the axis (X) of rotation of the support member (5) and symmetrically with respect to a plane passing through said axis and the means for detection of the projection (S) of the piston ring, said thrust and detection means being disposed on respective sides of the axis (X).

5. A device according to either one of claims 3 and 4 characterised in that the detection means comprise at least one measuring lever (13) pivoted on the support member (5) and movable radially with respect to the axis (X) between a first position of being moved away from said axis to permit the insertion of a piston into the device and a second position of being moved towards said axis, in contact with a part of the piston ring which is placed in the position of maximum projecti on from the groove by at least one thrust lever (6) which is placed in its second position.

6. A device according to claim 5 characterised in that it comprises a reference lever (12) movable radially with respect to the axis (X) of the support member (5) between a first position of being moved away from the axis (X) to permit the insertion of a piston into the device and a second position of being moved towards said axis, in contact with the peripheral surface of the piston in the vicinity of the point of contact of the measuring lever (13) with the part of maximum projection of the piston ring, the device further comprising means (22, 25, 38, 44) for transmitting the relative difference between the positions of the measuring lever (13) and the reference lever (12) with respect to the axis (X) of the piston to a member (100) for measuring said relative difference which is representative of the maximum projection (S) of the piston ring in line with the measuring lever (13).

7. A device according to claim 6 characterised in that the transmission means (22, 25, 38, 44) comprise a cam (22) mounted movably radially on a table (25) movable along the axis (X) of the device, the cam (25) passing between rollers (92) and (93) mounted on the levers (13) and (12) respectively to arrest the position of the table (25) along the axis (X) in dependence on the projection (S) of the piston ring as detected by rollers (94) and (95) mounted on the levers (12) and (13) respectively and bearing against the peripheral surface of the piston and against the projecting part of the piston ring respectively when the levers (6, 12, 13) are in their second position.

8. A device according to claim 7 characterised in that it comprises a displacement sensor (100) which is responsive to the axial position of an end portion (44) movable along the axis (X) with the table (25) to provide a signal representative of the projection (S) to be measured when the levers (6, 12, 13) move from their first to their second position.

9. A device according to claim 8 characterised in that it comprises a jack (87) provided with an operating rod movable along the axis (X) and arranged in such a way as to act on the axial position of the table (25) by way of means (34, 35), at least one cam (16) mounted on said table to act on the position of the thrust levers (6) while the cam (22) also acts on the position of the measuring lever (13) and the reference lever (12), wherein the jack (87) can be actuated to displace the table (25) in such a way as to return the levers (6, 12, 13) from their second to their first position.

10. A device according to claim 9 characterised in that it comprises means (83, 84, 85) for resiliently urging the levers (6, 13) towards the axis (X) of the device, and springs (90) for urging the table (25) against the action of the jack (87).

11. A device according to claim 10 characterised in that it comprises means (14, 15) for coupling with play between the reference lever (12) and the measuring lever (13).

12. A device according to any one of claims 3 to 11 characterised in that the levers (6, 12, 13) are provided with contact rollers (59, 94, 95) respectively.

13. A device according to any one of the preceding claims which is designed for sensing a plurality of piston rings (S1, S2, S3) fitted in grooves (G1, G2, G3) of the piston which are disposed in succession along the axis (X) of said piston characterised in that it comprises as many assemblies formed by thrust means and detection means for the projection of a piston ring as there are piston rings to be sensed, said assemblies being mounted on a common support member (5) mounted rotatably about an axis (X) of the device, on which a piston to be sensed is to be centered.

14. A device according to claim 13 characterised in that said assemblies are distributed regularly around the axis (X) of the support member.

15. Use of a sensing device according to any one of claims 2 to 14 in an apparatus for checking piston rings fitted to pistons (P1, P2, P3, P4) which are transported by a conveyor (111), said apparatus also comprising a robot (105, 106) for moving each piston from the conveyor (111) to the device (107) and for replacing the piston on the conveyor after sensing, means (108) for acquiring and processing signals delivered by the device and representative of the measurements in respect of projections of piston rings and the angular position of the measured projections around the axis of the piston, and means (109) for display and printing of the results of the processing operation.

16. Use according to claim 15 characterised in that the pistons are disposed in groups on pallets (110) entrained by the conveyor (111), that each pallet is stopped by an abutment (112) on the conveyor (111) until the end of the sensing operations concerning all the pistons carried by the pallet (110), and that the means (109) print on a label (113) which is fixed with respect to the pallet items of information produced by the processing means (108) and representative of the state of the sensed piston rings and the correctness of fitting thereof.

17. Use according to either one of claims 15 and 16 characterised in that the processing means (a) compare the measurements of piston ring projection acquired to predetermined minimum and maximum values, (b) compare the length of a gap formed in each piston ring to predetermined maximum and minimum lengths, (c) compare the relative angular positions of the gaps of a plurality of piston rings fitted to the same piston to predetermined ranges of angular positions, and (d) diagnose the correctness or non-correctness of a piston ring and the fitting thereof in dependence on the results of the preceding operations.
